# EUROPÄISCHE PATENTSCHRIFT

(11) **EP 2 226 672 B1**
(45) Veröffentlichungstag und Bekanntmachung des Hinweises auf die Patenterteilung: **08.05.2013**
(21) Anmeldenummer: 10002277.1
(22) Anmeldetag: 05.03.2010
(51) Int. Cl.: G02C 1/04, G02C 1/08, G02C 5/16, G02C 5/22, G02C 5/14

(54) **Brillengestell**
Spectacles frame
Monture de lunettes

(30) Priorität: 06.03.2009 DE 202009003059 U
(43) Veröffentlichungstag der Anmeldung: 08.09.2010
(73) Patentinhaber: Frost, Paris, 77880 Sasbach (DE); Frost, Marion, 77880 Sasbach (DE)
(72) Erfinder: Frost, Paris, 77880 Sasbach (DE); Frost, Marion, 77880 Sasbach (DE)
(74) Vertreter: Geitz Truckenmüller Lucht

(56) Entgegenhaltungen:
- WO-A1-2005/116727
- FR-A- 567 255
- US-A1- 2007 291 221

## Beschreibung

Die Erfindung betrifft ein Brillengestell mit einem die Brillengläser aufnehmenden Brillenrahmen und mit zwei Brillenbügeln an dem Brillenrahmen.

Bei bekannten Brillengestellen können die Brillenbügel zwei Stellungen relativ zum Brillenrahmen einnehmen: eine erste Stellung zur Aufbewahrung der Brille, in der die Brillenbügel an dem Brillenrahmen anliegen, und eine zweite Stellung zum Gebrauch der Brille, in der die Brillenbügel aufgeklappt oder aufgeschwenkt sind, damit ein Benutzer die Brille aufsetzen und tragen kann. Um die Bewegung der Brillenbügel von einer Stellung in die andere zu ermöglichen, sind bekannte Brillengestelle entweder mit Gelenken und Scharnieren oder mit elastisch verformbaren Brillenbügeln ausgestattet. Bei einer schraubenlosen Kopplung der Brillenbügel an den Brillenrahmen wird auf Schrauben, Stifte, Federn oder sonstige lose Verbindungselemente verzichtet. Unter den Brillengestellen mit schraubenloser Kopplung sind elastische Kopplungen bekannt. Diese haben die Eigenschaft, dass die Brillenbügel federnd an dem Brillenrahmen angeordnet sind. Zum Tragen der Brille durch eine Person werden die federnden Brillenbügel aus ihrer Ausgangsstellung ausgelenkt. Die Ausgangsstellung entspricht dabei der Stellung der Brillenbügel, wenn keine Kraft auf sie einwirkt. Die Feder ist Bestandteil der Brillenbügel oder des Brillenrahmens. Mit ihrer Federkraft drückt die Feder die Brillenbügel im Bereich des Ohres an den Kopf des Benutzers. Dadurch wird verhindert, dass sich die Position der Brille am Kopf des Benutzers ohne Einwirkung äußerer Kräfte verändert. Der Tragekomfort der Brille wird somit erhöht. Darüber hinaus wird durch die Feder eine Überlastung des Gelenks oder der sonstigen Kopplung der Brillenbügel an den Brillenrahmen vermieden. Dadurch kann verhindert werden, dass die Brille weder hinsichtlich des Gestells noch hinsichtlich der Brillengläser beschädigt wird, wenn die Brillenbügel weiter geschwenkt werden als die vorgesehene Endstellung zum Tragen der Brille. Derartige Brillengestelle sind jedoch häufig mit dem Nachteil einer aufwändigen Herstellung und einer geringen Stabilität verbunden.

Aus der WO 2005/116727 A1 ist ein Brillengestell mit einem Gelenk zum Anwinkeln der Brillenbügel bekannt, wobei das Gelenk in der Mitte der Gelenkfläche einen Materialüberschuss aufweist. Dieser Materialüberschuss soll zu einer Biegung des Gelenks führen, oder das Gelenk in einer Ebene halten. Gemäß einem Ausführungsbeispiel besteht der Brillenbügel aus einem flachen Streifen, der sich an seinem einen Ende in zwei voneinander abgewinkelte Streifen teilt. Diese beiden abgewinkelten Streifen sind an ihren Enden miteinander verbunden. Hierzu werden die Enden der abgewinkelten Streifen durch eine Verbindungsklammer zusammengedrückt und mit der Brillenfassung verbunden. In der Verbindunasklammer sind die beiden abgewinkelten Streifen nebeneinander angeordnet, so dass ihre Schmalseiten aufeinander stoßen. Als nachteilig erweist sich hierbei, dass zur Verbindung der Brillenbügel mit dem Brillenrahmen ein zusätzliches Verbindungsteil benötigt wird, und dass die Brillenbügel nicht zur einer Verbesserung des Sitzes des Brillengestells beitragen, da sie keine Elemente aufweisen, die federnd am Kopf des Benutzers anliegen.

In der FR 567 255 A ist ein Brillengestell offenbart, bei dem die Brillenbügel mit einem Vorsprung ausgestattet sind um das Brillengestell an den Schläfen einer das Brillengestell tragenden Person abzustützen. Die Vorsprünge weisen die Form einer Zunge oder Lasche auf. Sie können entweder an einem Stück mit den Brillenbügeln ausgeführt sein und federnd von den Brillenbügeln nach innen abstehen oder aus einem separaten Bauteil bestehen, das über ein Gelenk an dem Brillenbügel angeordnet ist. Bei einem Ausführungsbeispiel ist das dem Brillenrahmen zugewandte Ende des Vorsprungs mit einer Kerbe ausgestattet und mit dem übrigen Brillenbügel verbunden. Das freie Ende des Vorsprungs stützt sich dabei an einem mittleren Abschnitt des übrigen Brillenbügels ab und ist mit Spiel an diesem geführt. Als nachteilig erweist sich, dass das Brillengestell keine schraubenlose Kopplung der Brillenbügel an den Brillenrahmen aufweist, und dass die Vorsprünge in einem mittleren Bereich des Brillenbügels seitlich in Richtung des Kopfes eines Benutzers vorstehen. Dies führt dazu, dass die Vorsprünge einen Druck auf die Schläfe des Benutzers oder einen benachbarten Bereich aufweisen, was beim Tragen des Brillengestells stets als unangenehm empfunden wird. Im Bereich der Schläfe ist der Kopf besonders druckempfindlich.

Die US 2007/291221 A1 offenbart ein Brillengestell mit einem Brillenrahmen und zwei Brillenbügeln, welche über ein Verbindungsteil mit dem Brillenrahmen verbunden sind. Dabei weist der Brillenrahmen zwei seitlich abstehende Abschnitte mit je einer Ausnehmung auf. In die beiden Ausnehmungen wird das Verbindungsteil mit seinen beiden Ansätzen eingesetzt. Jeder der beiden Ansätze weist wiederum Ausnehmungen auf, in welche ein Brillenbügel eingesetzt ist. Die Brillenbügel sind an ihrem dem Brillenrahmen zugewandten Ende geschlitzt, so dass dieses Ende zwei flexible Streben aufweist. Das dem Brillenrahmen zugewandte Ende der Streben ist mit einem Vorsprung ausgestattet, mit dem die Streben in die Ausnehmungen der Ansätze des Verbindungsteils eingreifen. Als nachteilig erweist sich, dass zum Anordnen der Brillenbügel an dem Brillenrahmen zusätzliche Verbindungsteile notwendig sind, und dass der Sitz des Brillengestells gegenüber sonstigen bekannten Brillengestellen nicht verbessert ist.

Der vorliegenden Erfindung liegt die Aufgabe zugrunde, ein Brillengestell mit einer schraubenlosen Kopplung der Brillenbügel an den Brillenrahmen zur Verfügung zu stellen, welches ein geringes Gewicht und eine hohe Stabilität aufweist, und bei welchem sich die Brillenbügel federnd an den Kopf eines Benutzers anlegen.

Diese Aufgabe wird durch ein Brillengestell mit den Merkmalen des Anspruchs 1 gelöst. Jeder der beiden Brillenbügel weist an seinem dem Brillenrahmen zugewandten Ende zwei Streben auf, welche mit dem Brillenrahmen verbunden sind. Bei dem fertig gestellten, komplett montierten Brillengestell sind die Streben elastisch verformt im Vergleich zu einer entspannten Stellung der Streben vor der Montage des Brillengestells. Die elastische Verformung führt zu einer Wölbung der Brillenbügel nach innen in Richtung des Brillenrahmens. Die elastische Verformung ist dergestalt, dass der Abstand zwischen den beiden Streben an ihren dem Brillenrahmen zugewandten Enden kleiner ist als in einem Abschnitt der Streben zwischen dem dem Brillenrahmen zugewandten Ende und dem dem Brillenrahmen abgewandten Ende. Die elastische Verformung bewirkt eine Vorspannung der Brillenbügel. Die Brillenbügel nehmen dabei eine gekrümmte Form ein.

Aufgrund der federnden Eigenschaft der am Brillenrahmen angeordneten Brillenbügel, aufgrund der Vorspannung und aufgrund der gekrümmten Form legen sich die Brillenbügel beim Tragen in einem dem Brillenrahmen abgewandten Bereich federnd an den Kopf eines Benutzers an. Die Kraft, mit der sich die dem Brillenrahmen abgewandten Enden der Brillenbügel an den Kopf eines Benutzers beim Tragen drücken, ist aufgrund der Vorspannung größer als bei einem Brillenbügel ohne Vorspannung.

Der Übergang der Brillenbügel von einer ersten Stellung zur Aufbewahrung der Brille, in der die Brillenbügel an den Brillenrahmen angenähert sind, in eine zweite Stellung zum Tragen der Brille durch eine Person erfolgt nicht durch ein Drehen, Schwenken, Klappen oder Schnappen der Brillenbügel relativ zum Brillenrahmen sondern ausschließlich durch eine elastische Verformung der Brillenbügel und eventuell zusätzlich durch eine elastische Verformung von an dem Brillenrahmen angeordneten Bügelaufnahmen.

Die beiden Brillenbügel bestehen bevorzugt in dem Abschnitt, welcher die Streben aufweist, aus einem Stück und sind nicht aus mehreren Teilen zusammengesetzt. Das dem Brillenrahmen abgewandte Ende der Brillenbügel kann zur Erhöhung des Tragekomforts aus einem anderem Material bestehen als die Streben und die Rastelemente. Darüber hinaus besteht die Möglichkeit, dass das dem Brillenrahmen abgewandte Ende aus demselben Material besteht wie die Streben aber mit einem anderen Material umhüllt oder beschichtet ist.

In dem von dem Brillenrahmen zumindest teilweise gelösten Zustand, in welchem das Brillengestell nicht vollständig montiert ist, verlaufen die beiden Streben bevorzugt parallel in Längsrichtung des länglichen Brillenbügels. Sie sind nur an ihrem in der montierten Stellung dem Brillenrahmen abgewandten Ende über den Brillenbügel miteinander verbunden. Durch elastische Verformung können die im montierten Zustand dem Brillenrahmen zugewandten Enden der Streben eines Brillenbügels aufeinander zu bewegt werden, so dass der Abstand dieser Enden der Streben kleiner ist als in einem anderen Abschnitt der Streben zwischen den dem Brillenrahmen zugewandten Enden und den dem Brillenrahmen abgewandten Enden. Ferner ist der Abstand der beiden dem Brillenrahmen zugewandten Enden im montierten Zustand des Brillengestells kleiner als der Abstand dieser Enden im nicht montierten Zustand. Der nicht montierte Zustand der Brillenbügel entspricht einer entspannten Ausgangsstellung der beiden Streben. In dieser Ausgangsstellung sind die beiden Streben nicht verformt und stehen nicht unter Spannung. Im montierten Zustand des Brillengestells können die dem Brillenrahmen zugewandten Enden derart aneinander angenähert sein, dass sie sich überlappen oder kreuzen. Aufgrund der aus der Annäherung der Enden der beiden Streben resultierenden Verformung wirkt auf die Streben eine Rückstellkraft in Richtung der entspannten, nicht ausgelenkten Position der Streben. Diese Rückstellkraft ist für die Vorspannung verantwortlich.

Zusätzliche Befestigungsmittel zum Verbinden der Brillenbügel mit dem Brillenrahmen sind nicht notwendig. Sie können allenfalls zur Unterstützung der Verbindung der beiden Streben und/ oder der Verbindung zwischen den Streben und dem Brillenrahmen eingesetzt werden.

Bei beiden Streben eines Brillenbügels handelt es sich um freie Enden. Der Brillenrahmen ist mit zusätzlichen Bügelaufnahmeelementen ausgestattet, in welche die freien Enden der Streben eingeführt werden.

Die unter Spannung mit dem Brillenrahmen verbundenen Brillenbügel sorgen für eine hohe Stabilität des Brillengestells bei geringem Gewicht. Ferner sorgen sie dafür, dass sich die Brillenbügel beim Tragen des Brillengestells federnd an den Kopf eines Benutzers anlegen.

Nach einer vorteilhaften Ausgestaltung der Erfindung besteht jeder Brillenbügel aus einem Stab. Dabei weist der Stab einen in Längsrichtung des Brillenbügels verlaufenden Ausschnitt auf, der an dem dem Brillenrahmen im eingebauten Zustand zugewandten Ende geöffnet ist. Der Ausschnitt teilt einen Abschnitt des Stabs in die beiden Streben auf. Von der Länge und Breite des Ausschnitts, von der Dicke und Breite des Stabs und vom Material des Stabs hängt die Elastizität des Brillenbügels ab. Das Ausmaß der Verformung der Brillenbügel bei einem Annähern der Streben kann durch diese Parameter beeinflusst werden.

Die Brillenbügel können beispielsweise aus einem flachen Metallband bestehen, das einen in Längsrichtung der Brillenbügel verlaufenden Ausschnitt aufweist. Der Ausschnitt teilt einen Abschnitt des Metallbands in die beiden Streben auf. Das Metallband weist ein geringes Gewicht auf und verhält sich bei einer Auslenkung der beiden Streben wie eine Blattfeder. Darüber hinaus können andere Materialien wie beispielsweise Kunststoff Anwendung finden. Vorteilhafterweise weisen die beiden Brillenbügel einen rechteckigen Querschnitt quer zu ihrer Längsrichtung auf. Dabei sind zwei Seiten des Rechtecks wesentlich länger als die beiden anderen Seiten, so dass die Brillenbügel flach ausgebildet sind. Die Verformung der beiden Streben bei der Montage des Brillengestells erfolgt bevorzugt nicht senkrecht zu der Ebene, welche durch das entspannte Metallband definiert wird sondern in einer Richtung, welche in der Ebene verläuft.

Der Brillenrahmen ist zur Befestigung der beiden Brillenbügel mit Bügelaufnahmen ausgestattet. Ferner sind die Brillenbügel an dem dem Brillenrahmen zugewandten Ende mit mindestens einem Rastelement ausgestattet. Die Streben jedes Brillenbügels sind unter Spannung und in elastischer Verformung mit ihren dem Bügelrahmen zugewandten Enden überlappend in der Bügelaufnahme angeordnet. Zur Kopplung am Brillenrahmen werden die beiden Streben eines Brillenbügels durch eine Kraft, welche senkrecht zur Längsachse des Brillenbügels wirkt und im montierten Zustand des Brillengestells durch die Bügelaufnahmen ausgeübt wird, zusammengedrückt. Dies führt zu einer elastischen Verformung der beiden Streben. Die beiden Streben eines Brillenbügels sind überlappend in der zugehörigen Bügelaufnahme angeordnet. Dabei liegen die der Bügelaufnahme zugewandten Enden der Streben aufeinander und/ oder aneinander. Die beiden Streben können sich sogar kreuzen. Die elastische Verformung bewirkt eine Vorspannung der Brillenbügel. Die beiden Streben üben eine Kraft auf die Bügelaufnahme aus, die ihrer Tendenz entspringt in ihre entspannte Ausgangsposition ohne Überlappung zurückzukehren. Aufgrund der elastischen Verformung der Streben wölben sich die Brillenbügel nach innen in Richtung des Brillenrahmens.

Das Rastelement besteht bevorzugt aus einer speziellen Form des Endbereichs der Strebe, welcher beispielsweise eine Kerbe, eine Nut, eine Hinterschneidung oder eine Rastnase aufweist. Auch der Brillenrahmen kann mit seinen Bügelaufnahmen aus einem Stück bestehen. Die Verbindung zwischen Brillenrahmen und Brillenbügel kommt durch das Eingreifen der Rastelemente in den Bügelaufnahmen zustande. Hierbei wird auf zusätzliche lose Verbindungsteile wie Schrauben, Stifte oder Federn verzichtet. Zur Erhöhung der Stabilität können die Brillenbügel im Bereich der Rastelemente mit den Bügelaufnahmen des Brillenrahmen durch Nieten zusätzlich verbunden sein.

Nach einer weiteren vorteilhaften Ausgestaltung der Erfindung ist das Rastelement ein Endbereich der Strebe, welcher eine Kerbe zum Einrasten in die Bügelaufnahme aufweist.

Nach einer weiteren vorteilhaften Ausgestaltung der Erfindung besteht jede der Bügelaufnahmen aus zwei federnd an dem Brillenrahmen angeordneten Aufnahmeelementen, welche durch die Streben der Brillenbügel zusammengedrückt sind. Jedes Aufnahmeelement weist eine Öffnung auf, in welche die Enden der Streben mit ihren Rastelementen eingesetzt werden. Die Öffnungen der beiden Aufnahmeelemente können gleich groß sein. Jedes der Aufnahmeelemente kann beispielsweise die Form eines Rings oder einer Öse aufweisen. Um die Rastelemente der beiden Streben eines Brillenbügels in die Aufnahmeelemente einzusetzen werden die Öffnungen beider Aufnahmeelemente zur Deckung gebracht. Im zusammengefügten Zustand drücken die beiden Streben der Brillenbügel mit ihrer Rückstellkraft die beiden Aufnahmeelemente der Bügelaufnahmen zusammen. Ferner drücken die beiden Aufnahmeelemente die Streben in ihre überlappte Stellung. Dadurch halten sich die Teile gegenseitig, ohne dass hierzu zusätzliche Bauteile wie beispielsweise Schrauben oder Stifte notwendig sind. Ferner wird durch die beiden Aufnahmeelemente der Bügelaufnahmen der Übergang der Brillenbügel von der ersten Stellung zur Aufbewahrung der Brille in die zweite Stellung zum Gebrauch der Brille begünstigt und die Stabilität des Brillengestells verbessert.

Nach einer weiteren vorteilhaften Ausgestaltung der Erfindung weist der Brillenrahmen für jedes Brillenglas eine als Spange ausgebildete Fassung auf; welche das Brillenglas vollständig umgreift. Dabei ist an den federnden Enden der Spange jeweils ein Aufnahmeelement angeordnet. Damit bewirken die beiden Streben ihrerseits das Zusammendrücken des als Spange ausgebildeten Brillenrahmens. Dadurch werden die Brillengläser in dem Brillenrahmen gehalten. Dies erlaubt eine Befestigung der Brillengläser in dem Brillenrahmen ohne zusätzliche Hilfsmittel.

Nach einer weiteren vorteilhaften Ausgestaltung der Erfindung ist der Brillenrahmen mit einem formstabilen ersten Abschnitt ausgestattet, der die Brillengläser teilweise umgreift und als Bügelaufnahme für jeden Brillenbügel ein Aufnahmeelement aufweist. Ferner weist der erste Abschnitt Öffnungen zum Einhängen zweier im Verhältnis zu ihrer Länge dünnen, flexiblen zweiten Abschnitten auf, welche die Brillengläser ebenfalls teilweise umgreifen. Damit werden die Brillengläser teilweise durch den ersten formstabilen Abschnitt und teilweise durch die zweiten flexiblen Abschnitte aufgenommen. Dabei werden die flexiblen zweiten Abschnitte derart gespannt, dass sie unter Spannung an dem zugehörigen Brillenglas anliegen und das Brillenglas durch den flexiblen zweiten Abschnitt gegen den formstabilen ersten Abschnitt gedrückt wird. In bevorzugter Weise verläuft der flexible zweite Abschnitt in einer Nut des Brillenglases. Bei den Öffnungen zum Einhängen der zweiten flexiblen Abschnitte kann es sich beispielsweise um runde oder eckige Ausnehmungen in dem ersten formstabilen Abschnitt handeln.

Nach einer weiteren vorteilhaften Ausgestaltung der Erfindung besteht der erste formstabile Abschnitt aus Metall und der zweite flexible Abschnitt aus einer oder mehreren Fasern, beispielsweise aus Polyamidfasern oder einem Polyamidfaden.

Bei einem nicht erfindungsgemäßen Brillengestell sind die dem Brillenrahmen zugewandten Enden der beiden Streben eines Brillenbügels unter Spannung überlappend miteinander verbunden. Dabei ist nur eine der beiden Streben eines Brillenbügels direkt mit dem Brillenrahmen verbunden. Die andere Strebe ist mit der ersten Strebe verbunden und daher nur mittelbar mit dem Brillenrahmen verbunden. Die Befestigung des freien Endes der einen Strebe mit der anderen Strebe kann beispielsweise durch Verschweißen oder Vernieten erfolgen.

Bei einem nicht erfindungsgemäßen Brillengestell bestehen der Brillenrahmen und die Brillenbügel aus einem Stück eines Materials. Dabei geht eine der beiden Streben eines Brillenbügels direkt in den Brillenrahmen über. Bei der anderen Strebe ist das dem Brillenrahmen zugewandte Ende vor der Montage des Brillengestells ein freies Ende. Im hinteren Abschnitt des Brillenbügels sind die beiden Streben ebenfalls miteinander verbunden.

Nach einer weiteren vorteilhaften Ausgestaltung der Erfindung besteht das Brillengestell zumindest teilweise aus Stahl. Dieses Material zeichnet sich durch eine Elastizität bei hoher Stabilität und geringem Gewicht aus und ist darüber hinaus gut zu verarbeiten. Es können jedoch auch Kunststoffe zur Herstellung des Brillengestells eingesetzt werden.

Nach einer weiteren vorteilhaften Ausgestaltung der Erfindung besteht der Brillenrahmen aus einem Stück. Ferner besteht jeder Brillenbügel aus einem Stück. Dies erleichtert die Herstellung und sorgt für eine hohe Stabilität trotz geringen Gewichts des Brillengestells.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung sind zwei Ausführungsbeispiele eines erfindungsgemäßen Brillengestells dargestellt. Es zeigen:
- Figur 1: erstes Ausführungsbeispiel eines Brillengestells in perspektivischer Darstellung in der geöffneten Stellung der Brillenbügel,
- Figur 2: Brillenrahmen des Brillengestells gemäß Figur 1 in einer Aufsicht,
- Figur 3: Brillenbügel des Brillengestells gemäß Figur 1 in von dem Brillenrahmen gemäß Figur 2 losgelösten Stellung in Seitenansicht,
- Figur 4: Brillengestell gemäß Figur 1 in einer geschlossenen Stellung der Brillenbügel,
- Figur 5: zweites Ausführungsbeispiel eines Brillenrahmens in einer Aufsicht,
- Figur 6: zweites Ausführungsbeispiel eines Brillenbügels in einer von einem Brillenrahmen losgelösten Stellung in Seitenansicht,
- Figur 7: nicht erfindungsgemäßes Brillengestells in nicht vollständig montiertem Zustand in einer Aufsicht.

### Beschreibung der Ausführungsbeispiele

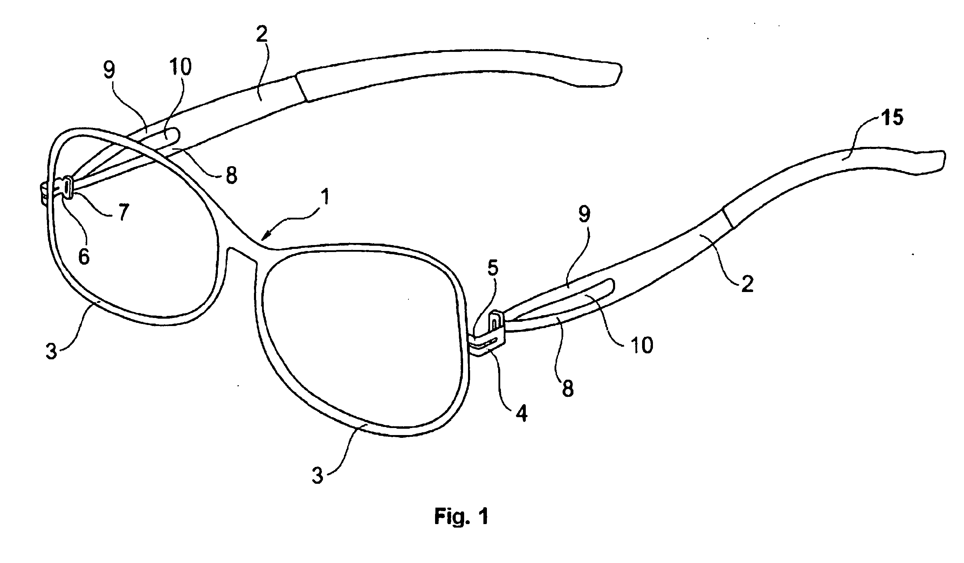

In den Figuren 1 bis 4 ist ein erstes Ausführungsbeispiel eines Brillengestells dargestellt. Figur 1 zeigt das Brillengestell mit einem Brillenrahmen 1 und zwei Brillenbügeln 2 in einer perspektivischen Ansicht. Die Brillenbügel sind elastisch verformt und befinden sich in einer geöffneten Stellung. In dieser Stellung kann das Brillengestell von einer Person aufgesetzt und getragen werden. Der Brillenrahmen 1 besteht aus zwei als Spange ausgebildeten Fassungen 3 für Brillengläser. Die Brillengläser sind in der Zeichnung nicht dargestellt. An der den Brillenbügeln 2 zugewandten Seite sind die Fassungen 3 offen. Aufgrund ihrer Elastizität werden die Fassungen 3 durch die beiden Brillenbügel 2 zusammengedrückt. Diese Kraft bewirkt, dass die Brillengläser in den Fassungen 3 gehalten werden.

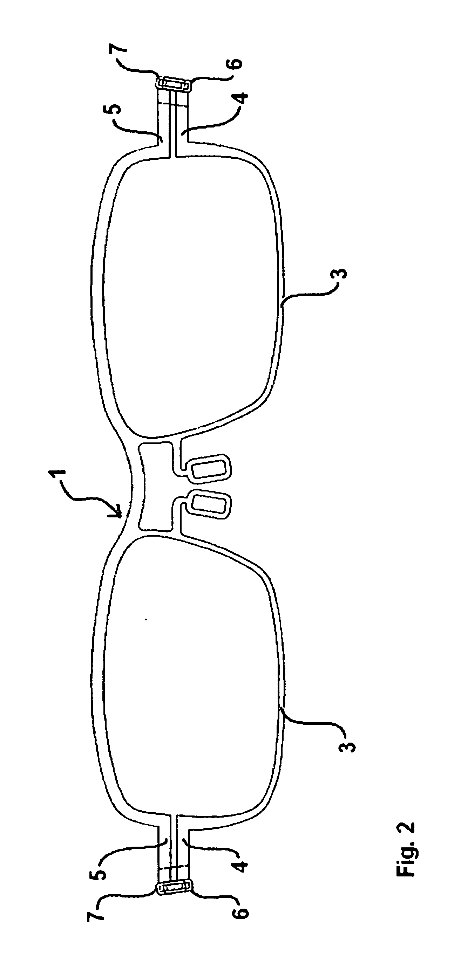

An den den Brillenbügeln 2 zugewandten Enden 4 und 5 der Fassungen 3 ist jeweils ein Aufnahmeelement 6 und 7 einer Bügelaufnahme angeordnet. Dies ist in Figur 2 dargestellt. Bei den Aufnahmeelementen 6 und 7 handelt es sich um längliche Ösen, welche mit ihrer Längsrichtung vertikal ausgerichtet sind und zumindest näherungsweise gleich groß sind. Zum Einsetzen der Brillenbügel 2 werden die beiden Aufnahmeelemente 6 und 7 übereinander gelegt und ihre Öffnungen zur Deckung gebracht.

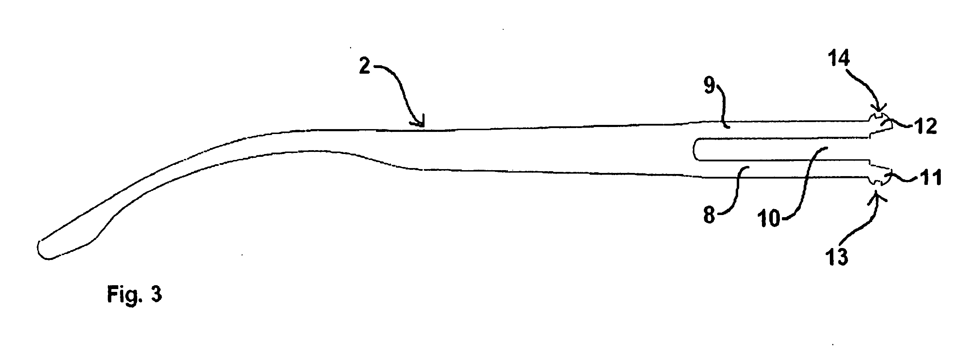

Die beiden Brillenbügel 2 weisen zwei längliche Streben 8 und 9 auf, welche in Längsrichtung der Brillenbügel 2 verlaufen und durch einen Ausschnitt 10 voneinander getrennt sind. Figur 3 zeigt einen Brillenbügel 2 in Seitenansicht im entspannten Zustand. Ist der Brillenbügel nicht in den Brillenrahmen 1 eingesetzt, so wirken auf die beiden Streben 8 und 9 keine Kräfte, die sie wie in Figur 1 dargestellt zusammendrücken. In diesem entspannten Zustand verlaufen die beiden Streben 8 und 9 parallel. An den voneinander abgewandten Seiten sind die freien Enden der beiden Streben 8 und 9 verbreitert. Dadurch entsteht jeweils ein seitlich abstehender Abschnitt 11 und 12. Jeder der beiden seitlich abstehenden Abschnitte ist mit einer Kerbe 13 und 14 ausgestattet. Diese unterteilt den seitlich abstehenden Abschnitt in zwei Rastnasen. Die seitlich abstehenden Abschnitte 11 und 12 bilden zusammen mit den Kerben 13 und 14 die Rastelemente der Streben 8 und 9.

Zum Befestigen der Brillenbügel 2 an dem Brillenrahmen 1 werden die beiden Streben 8 und 9 so weit zusammengedrückt, dass die beiden seitlich abstehenden Abschnitte 11 und 12 zumindest teilweise aufeinander liegen und sich überlappen. Ferner werden die federnden Enden 4 und 5 der Fassung 3 des Brillenrahmens 1 zusammengedrückt. Dabei werden die beiden als Öse ausgebildeten Aufnahmeelemente 6 und 7 an den federnden Enden 4 und 5 übereinander gelegt, so dass sie eine gemeinsame Öffnung für die Streben 8 und 9 bilden. Dann werden die Streben 8 und 9 mit ihren seitlich abstehenden Abschnitten 11 und 12 in die Aufnahmeelemente 6 und 7 der Bügelaufnahmen des Brillenrahmens 1 eingeführt, so dass die Kerben 13 und 14 in den Aufnahmeelementen 6 und 7 angeordnet sind. Nach Wegfall der von außen zur Montage einwirkenden Kraft rasten die Aufnahmeelemente 6 und 7 in den Kerben 13 und 14 ein. Durch die Rückstellkraft der Streben 8 und 9, mit der diese in Richtung der in Figur 3 gezeigten entspannten Stellung drücken, werden die Streben 8 und 9 gegen die Aufnahmeelemente 6 und 7 gepresst.

Dies bewirkt zum einen das Zusammendrücken der federnden Enden 4 und 5 der Fassung 3 und das Einklemmen der in der Fassung angeordneten Brillengläser. Zum anderen sind die Brillenbügel 2 aufgrund dieser Kraft und aufgrund der in die Kerben 13 und 14 eingerasteten Aufnahmeelemente 6 und 7 unverlierbar mit dem Brillenrahmen 1 verbunden. Die Verbindung zwischen Brillenbügel 2 und Brillenrahmen 1 gestattet auch eine Auslenkung der Brillenbügel von ihrer ersten in die zweite Stellung und umgekehrt. Die teilweise Überlappung der Streben 8 und 9 ist in der Darstellung gemäß Figur 1 erkennbar.

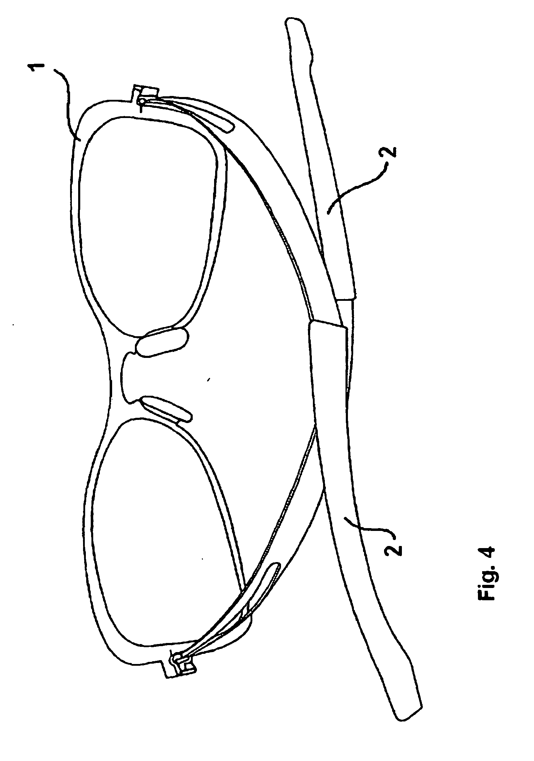

In Figur 4 ist das Brillengestell gemäß Figur 1 in einer geschlossenen Stellung der Brillenbügel 2 dargestellt. In dieser Position sind die Brillenbügel 2 weiter in Richtung des Brillenrahmens 1 gebogen als in der in Figur 1 dargestellten geöffneten Stellung.

Die Brillenbügel 2 sind an ihrem dem Brillenrahmen abgewandten Ende mit einer Umhüllung 15 aus Kunststoff versehen. Durch diese Umhüllung wird der Tragekomfort erhöht.

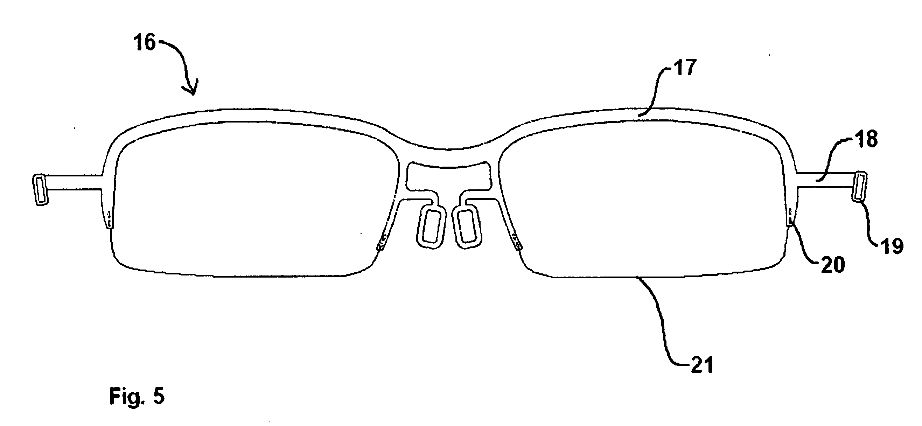

In Figur 5 ist ein zweites Ausführungsbeispiel eines Brillenrahmens 16 ohne Brillenbügel dargestellt. Der Brillenrahmen weist einen ersten formstabilen Abschnitt 17 auf, der zwei in der Zeichnung nicht dargestellte Brillengläser nach oben und zu den Seiten umgreift. An dem ersten Abschnitt 17 des Brillenrahmens sind seitlich Bügelaufnahmen 18 mit Aufnahmeelementen 19 angeordnet. In diese Bügelaufnahmen 18 werden Brillenbügel gemäß Figur 5 oder auch gemäß Figur 3 eingesetzt. Im Unterschied zu dem ersten Ausführungsbeispiel weist der Brillenrahmen 16 gemäß zweitem Ausführungsbeispiel nur ein Aufnahmeelement 19 an jeder Bügelaufnahme 18 auf. Die Aufnahmeelemente 18 weisen die Form einer länglichen Öse auf.

Die freien, nach unten weisenden Enden des ersten formstabilen Abschnitts 17 des Brillenrahmens 16 weisen Öffnungen 20 auf. In diese Öffnungen wird ein zweiter flexibler Abschnitt 21 des Brillenrahmens eingehängt und befestigt. Dieser zweite flexible Abschnitt 21 besteht bei dem Ausführungsbeispiel aus einem Polyamidfaden. Er legt sich von unten an die Brillengläser an, die in den ersten formstabilen Abschnitt 17 eingesetzt sind. Der Polyamidfaden wird gespannt, so dass er die Brillengläser von unten gegen den ersten formstabilen Abschnitt 17 drückt und die Brillengläser damit in dem Brillenrahmen 16 fixiert.

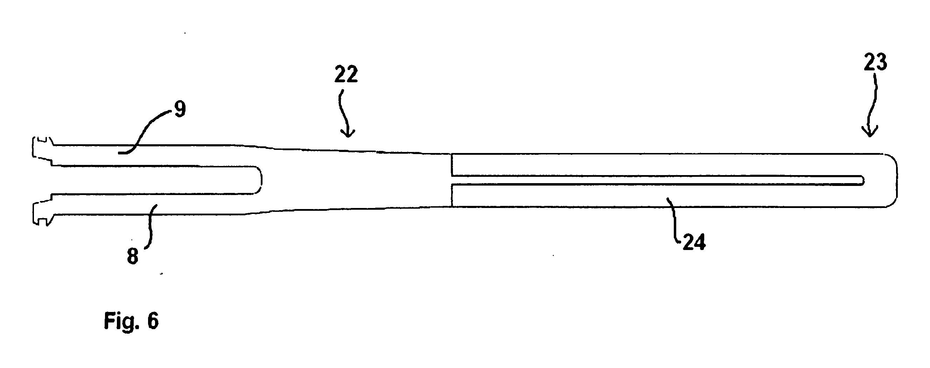

In Figur 6 ist ein zweites Ausführungsbeispiel eines Brillenbügels 22 dargestellt, der an einem Brillenrahmen 1 gemäß Figur 1 und 2 oder an einem Brillenrahmen 16 gemäß Figur 4 angeordnet werden kann. Der Brillenbügel 22 unterscheidet sich von dem Brillenbügel 2 hinsichtlich des den Streben 8 und 9 abgewandten Endes 23, mit dem sich der Brillenbügel an den Kopf eines Benutzers anlegt. Bei dem Brillenbügel 2 ist das den Streben 8 und 9 abgewandte Ende nach unten gebogen. Es besteht aus demselben Material wie die Streben 8 und 9 und ist mit einer Umhüllung 23 versehen. Der Brillenbügel 22 weist einen geradlinigen Verlauf auf. Das Ende 23 ist nicht nach unten gebogen. Der den beiden Streben 8 und 9 abgewandte Bereich weist einen aus Kunststoff hergestellten Abschnitt 24 auf.

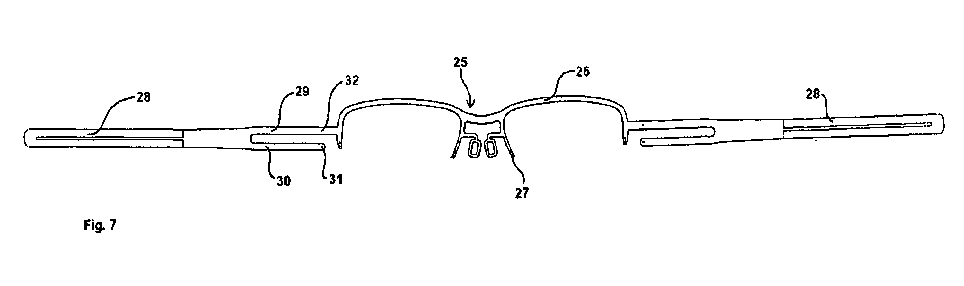

In Figur 7 ist ein drittes Brillengestells im nicht montierten Zustand dargestellt. Der Brillenrahmen 25 gleicht dem Brillenrahmen 16 des zweiten Ausführungsbeispiels. Er weist ebenfalls einen ersten formstabilen Abschnitt 26 auf, an welchem über Öffnungen 27 zweite flexible Abschnitte für jedes Brillenglas befestigt werden können. Die flexiblen Abschnitte und die Brillengläser sind in Figur 7 nicht dargestellt. Im Unterschied zu dem Brillengestell des zweiten Ausführungsbeispiels sind die beiden Brillenbügel 28 einstückig mit dem Brillenrahmen 25 ausgeführt. Hierbei geht jeweils eine Strebe 29 eines jeden Brillenbügels 28 direkt in den Brillenrahmen 25 über. Die andere Strebe 30 ist im dargestellten nicht montierten Zustand nicht direkt mit dem Brillenrahmen 25 verbunden. Sie wird bei der Montage derart verformt, dass das freie Ende der Strebe 30 auf die Strebe 29 gelegt wird, wobei die vorgesehene Verbindungsstelle 31 der Strebe 30 mit der Verbindungsstelle 32 der ersten Strebe 29 zur Deckung kommt. Die beiden Streben 29 und 30 werden an dieser Position miteinander verschweißt um sie dauerhaft zu verbinden.

Sämtliche Merkmale der Erfindung können sowohl einzeln als auch in beliebiger Kombination miteinander erfindungswesentlich sein.

### Bezugszahlen

- 1: Brillenrahmen
- 2: Brillenbügel
- 3: Fassung für Brillengläser
- 4: federndes Ende der Fassung
- 5: federndes Ende der Fassung
- 6: Aufnahmeelement der Bügelaufnahme
- 7: Aufnahmeelement der Bügelaufnahme
- 8: Strebe des Brillenbügels
- 9: Strebe des Brillenbügels
- 10: Ausschnitt
- 11: seitlich abstehender Abschnitt
- 12: seitlich abstehender Abschnitt
- 13: Kerbe
- 14: Kerbe
- 15: Umhüllung des Brillenbügels
- 16: Brillenrahmen
- 17: erster formstabiler Abschnitt
- 18: Bügelaufnahme
- 19: Aufnahmeelement
- 20: Öffnung
- 21: zweiter flexibler Abschnitt
- 22: Brillenbügel
- 23: den Streben abgewandtes Ende des Brillenbügels 22
- 24: Abschnitt aus Kunststoff
- 25: Brillenrahmen
- 26: erster formstabiler Abschnitt
- 27: Öffnung
- 28: Brillenbügel
- 29: Strebe
- 30: Strebe
- 31: Verbindungsstelle
- 32: Verbindungsstelle

## Patentansprüche

1. Brillengestell
mit einem Brillengläser aufnehmenden Brillenrahmen (1, 16, 25),
mit zwei Brillenbügeln (2, 22, 28) an dem Brillenrahmen (1, 16, 25),
mit mindestens zwei elastisch verformbaren Streben (8, 9, 29, 30) jedes Brillenbügels (2, 22, 28) an seinem dem Brillenrahmen (1, 16, 25) zugewandten Ende, welche mit dem Brillenrahmen (1, 16, 25) verbunden sind, mit einer bei dem komplett montierten Brillengestell elastischen Verformung der Streben (8, 9, 29, 30) gegenüber einer entspannten, nicht montierten Stellung der Streben (8, 9, 29, 30) unter Ausbildung einer Wölbung der Brillenbügel (2, 22, 28) nach innen in Richtung des Brillenrahmens (1, 16, 25), wobei diese zweite Stellung der Brillenbügel (2, 22, 28) zum Tragen einer Brille durch eine Person dient, und wobei der Übergang der Brillenbügel (2, 22, 28) von einer ersten Stellung zur Aufbewahrung der Brille in die zweite Stellung durch eine elastische Verformung der Brillenbügel (2, 22, 28) erfolgt,
mit einem Abstand der dem Brillenrahmen (1, 16, 25) zugewandten Enden der Streben (8, 9, 29, 30) bei dem komplett montierten Brillengestell, der kleiner ist als der Abstand dieser Enden der Streben (8, 9, 29, 30) in einer entspannten nicht montierten Stellung der Streben
wobei der Brillenrahmen (1, 16) zur Befestigung der beiden Brillenbügel (2, 22) mit Bügelaufnahmen (6, 7, 18, 19) ausgestattet ist,
**dadurch gekennzeichnet,**
**dass** die Brillenbügel (2, 22) an dem dem Brillenrahmen (1, 16) zugewandten Ende mit mindestens einem Rastelement (11, 12, 13, 14) ausgestattet sind, und dass die Streben (8, 9) jedes Brillenbügels (2, 22) unter Spannung und in elastischer Verformung mit ihren dem Brillenrahmen (1, 16, 25) zugewandten Enden überlappend in der Bügelaufnahme (6, 7, 18) angeordnet sind, wobei das Rastelement (11, 12, 13, 14) in die jeweilige Bügelaufnahme (6, 7, 18) eingreift.

2. Brillengestell gemäß Anspruch 1, **dadurch gekennzeichnet, dass** jeder der Brillenbügel (2, 22, 28) aus einem Stab besteht, und dass der Stab einen in Längsrichtung des Brillenbügels (2, 22, 28) verlaufenden Ausschnitt (10) aufweist, welcher den dem Brillenrahmen (1, 16, 25) zugewandten Abschnitt des Stabs in die beiden Streben (8, 9, 29, 30) aufteilt.

3. Brillengestell nach Anspruch 1 oder 2, **dadurch gekennzeichnet, dass** der Endbereich der Streben (8, 9) als Rastelement eine Kerbe (13, 14) zum Einrasten in die Bügelaufnahme (6, 7, 18) aufweist.

4. Brillengestell nach einem der vorhergehenden Ansprüche, **dadurch gekennzeichnet, dass** jede der Bügelaufnahmen aus zwei federnd an dem Brillenrahmen (1) angeordneten Aufnahmeelementen (6, 7) besteht, welche zum Einsetzen der Brillenbügel übereinander gelegt und mit ihren Öffnungen zur Deckung gebracht sind, und welche durch die Streben (8, 9) der Brillenbügel (2) zusammengedrückt sind.

5. Brillengestell nach Anspruch 4, **dadurch gekennzeichnet, dass** der Brillenrahmen (1) für jedes Brillenglas eine als Spange ausgebildete Fassung (3) aufweist, welche das Brillenglas vollständig umgreift, und dass an den federnden Enden (4, 5) der Spange jeweils ein Aufnahmeelement (6, 7) angeordnet ist.

6. Brillengestell nach einem der vorhergehenden Ansprüche, **dadurch gekennzeichnet, dass** der Brillerahmen (1) aus einem Stück besteht, und dass jeder Brillenbügel (2) aus einem Stück besteht.

7. Brillengestell nach einem der Ansprüche 1 bis 3, **dadurch gekennzeichnet, dass** der Brillenrahmen (16) mit einem formstabilen ersten Abschnitt (17) ausgestattet ist, der die Brillengläser teilweise umgreift und als Bügelaufnahme (18) für jeden Brillenbügel (2, 22) ein Aufnahmeelement (19) aufweist, und dass der erste Abschnitt (17) Öffnungen (20) zum Befestigen eines im Verhältnis zu seiner Länge dünnen, flexiblen zweiten Abschnitts (21) aufweist, welcher die Brillengläser teilweise umgreift.

8. Brillengestell nach Anspruch 7, **dadurch gekennzeichnet, dass** der erste Abschnitt (17) aus Metall und der zweite Abschnitt (21) aus einer oder mehreren Fasern oder einem Faden besteht.

9. Brillengestell nach einem der vorhergehenden Ansprüche, **dadurch gekennzeichnet, dass** es zumindest teilweise aus Metall besteht.

## Claims

1. Spectacles frame
with a spectacles rim (1, 16, 25) incorporating the lenses,
with two temples (2, 22, 28) at the spectacles rim (1, 16, 25),
with at least two elastically deformable stays (8, 9, 29, 30) of each temple (2, 22, 28) at the end facing the spectacles rim (1, 16, 25) which are connected to the spectacles rim (1, 16, 25),
with an elastic deformation of the stays (8, 9, 29, 30) with the spectacles frame completely assembled compared to a relaxed, uninstalled position of the stays (8, 9, 29, 30) with the formation of an inward curve of the temples (2, 22, 28) in the direction of the spectacles rim (1, 16, 25), whereby this second position of the temples (2, 22, 28) is used for the spectacles to be worn by a person and whereby the transition of the temples (2, 22, 28) from the first position into the second position occurs by means of an elastic deformation of the temples (2, 22, 28) for preservation of the spectacles,
with a distance of the ends of the stays (8, 9, 29, 30) facing the spectacles rim (1, 16, 25) with the completely assembled spectacles frame that is less than the distance of these ends of the stays (8, 9, 29, 30) in a relaxed, uninstalled position of the stays
whereby the spectacles rim (1, 16, 25) is equipped for fastening both temples (2, 22) with temple mounts (6, 7, 18, 19),
**characterised in that**
the temples (2, 22) on the end facing the spectacles rim (1, 16) are equipped with at least one catch element (11, 12, 13, 14), and that the stays (8, 9) of each temple (2, 22) are arranged under tension and in elastic deformation with their ends facing the spectacles rim (1, 16, 25) overlapping in the temple mount (6, 7, 18), whereby the catch element (11, 12, 13, 14) engages in the respective temple mount (6, 7, 18).

2. Spectacles frame according to claim 1, **characterised in that** each of the temples (2, 22, 28) comprises one bar, and that the bar has a cut-out (10) running vertically along the temple (2, 22, 28) that divides the section of the bar facing the spectacles rim (1, 16, 25) into the two stays (8, 9, 29, 30).

3. Spectacles frame according to claim 1 or 2, **characterised in that** the end area of the stays (8, 9) as the catch element has a notch (13, 14) for engaging in the temple mount (6, 7, 18).

4. Spectacles frame according to one of the previous claims, **characterised in that** each of the temple mounts comprises two mount elements (6, 7) arranged elastically at the spectacles rim (1) that are placed on top of one another and the openings of which are aligned for insertion of the temples, and that are pressed together by the stays (8, 9) of the temples (2).

5. Spectacles frame according to claim 4, **characterised in that** the spectacles rim (1) for each lens has an eyepiece (3) designed as a clip that completely encompasses the lens and that one mount element (6, 7) is arranged at each of the elastic ends (4, 5) of the clip.

6. Spectacles frame according to one of the previous claims, **characterised in that** the spectacles rim (1) is made of one piece and that each temple (2) is made of one piece.

7. Spectacles frame according to one of claims 1 to 3, **characterised in that** the spectacles rim (16) is equipped with a dimensionally stable first section (17) that partially encompasses the lenses and has a mount element (19) as the temple mount (18) for each temple (2, 22), and that the first section (17) has openings (20) for securing a second section (21) that is thin and flexible compared to its length and that partially encompasses the lenses.

8. Spectacles frame according claim 7, **characterised in that** the first section (17) is made of metal and the second section (21) is made of one or more fibres or a thread.

9. Spectacles frame according to one of the previous claims, **characterised in that** it is at least partially made of metal.

## Revendications

1. Monture de lunettes
avec un cadre (1, 16, 25) destiné à recevoir des verres de lunettes, avec deux branches de lunettes (2, 22, 28) reliées au cadre (1, 16, 25), chaque branche de lunettes (2, 22, 28) présentant à son extrémité côté cadre (1, 16, 25) au moins deux pattes élastiquement déformables (8, 9, 29, 30) qui sont reliées au cadre (1, 16, 25),
ces pattes (8, 9, 29, 30) présentant, lorsque la monture de lunettes est entièrement montée, une déformation élastique par rapport à une position sans contrainte des pattes (8, 9, 29, 30) avant leur montage, qui entraîne une flexion des branches de lunettes (2, 22, 28) vers l'intérieur en direction du cadre (1, 16, 25), cette deuxième position des branches de lunettes (2, 22, 28) servant au port des lunettes par une personne et le passage d'une première position des branches de lunettes (2, 22, 28) servant au rangement des lunettes à la deuxième position étant réalisé par une déformation élastique des branches de lunettes (2, 22, 28),
avec un écart entre les extrémités des pattes (8, 9, 29, 30) côté cadre (1, 16, 25) lorsque la monture de lunettes est entièrement montée, qui est inférieur à l'écart entre ces extrémités des pattes (8, 9, 29, 30) dans une position sans contrainte de ces pattes avant leur montage,
le cadre (1, 16) étant doté de tenons (6, 7, 18, 19) pour la fixation des deux branches de lunettes (2, 22),
**caractérisée en ce que**
les branches de lunettes (2, 22) sont dotées d'au moins un élément d'arrêt (11, 12, 13, 14) aux extrémités côté cadre (1, 16), et que les pattes (8, 9) de chaque branche de lunettes (2, 22) sont sous contrainte et déformées élastiquement quand leurs extrémités côté cadre (1, 16, 25) sont disposées dans le tenon (6, 7, 18) en se chevauchant, l'élément d'arrêt (11, 12, 13, 14) s'engrenant alors dans le tenon (6, 7, 18) correspondant.

2. Monture de lunettes selon la revendication 1, **caractérisée en ce que** chacune des branches de lunettes (2, 22, 28) se compose d'une tige et que cette tige présente une découpe dans le sens longitudinal de la branche de lunettes (2, 22, 28) qui divise la section de la tige côté cadre (1, 16, 25) en formant deux pattes (8, 9, 29, 30).

3. Monture de lunettes selon la revendication 1 ou 2, **caractérisée en ce que** l'élément d'arrêt à l'extrémité des pattes (8, 9) présente une encoche (13, 14) destinée à un encliquetage dans le tenon (6, 7, 18).

4. Monture de lunettes selon l'une quelconque des revendications précédentes, caractérisée en que chacun des tenons se compose de deux éléments d'assemblage (6, 7) élastiques disposés sur le cadre (1) qui, pour la mise en place des branches de lunettes, sont posés l'un sur l'autre avec leurs orifices coïncidant entre eux et pressés par les pattes (8, 9) des branches de lunettes (2).

5. Monture de lunettes selon la revendication 4, **caractérisée en ce que** le cadre (1) présente pour chaque verre de lunettes un support (3) en forme de cercle qui entoure complètement le verre de lunettes et **en ce qu'**un élément d'assemblage (6, 7) est disposé sur chaque extrémité élastique (4, 5) du cercle.

6. Monture de lunettes selon l'une quelconque des revendications précédentes, **caractérisée en ce que** le cadre (1) est en une seule pièce et que chaque branche de lunettes (2) est en une seule pièce.

7. Monture de lunettes selon l'une des revendications 1 à 3, **caractérisée en ce que** le cadre (16) est constitué d'une première section (17) indéformable qui entoure en partie les verres de lunettes et qui présente pour chacune des branches de lunettes (2, 22) un élément d'assemblage (19) comme tenon (18), et **en ce que** la première section (17) présente des orifices (20) pour la fixation d'une deuxième section (21) flexible, mince par rapport à sa longueur et entourant en partie les verres de lunettes.

8. Monture de lunettes selon la revendication 7, **caractérisée en ce que** la première section (17) est en métal et que la deuxième section (21) est constituée d'une ou plusieurs fibres ou d'un seul fil.

9. Monture de lunettes selon l'une quelconque des revendications précédentes, **caractérisée en ce qu'**elle est constituée au moins en partie en métal.
